# EUROPÄISCHE PATENTSCHRIFT

(11) **EP 0 743 121 B1**
(45) Veröffentlichungstag und Bekanntmachung des Hinweises auf die Patenterteilung: **05.01.2000**
(21) Anmeldenummer: 96107514.0
(22) Anmeldetag: 10.05.1996
(51) Int. Cl.: B23D 77/02

(54) **Reibahle**
Reamer
Alésoir

(30) Priorität: 15.05.1995 DE 19518241
(43) Veröffentlichungstag der Anmeldung: 20.11.1996
(73) Patentinhaber: MAPAL Fabrik für Präzisionswerkzeuge Dr. Kress KG, D-73431 Aalen (DE)
(72) Erfinder:
(74) Vertreter: Gleiss, Alf-Olav, Dipl.-Ing.

(56) Entgegenhaltungen:
- DD-A- 230 808
- DE-A- 3 404 005
- DE-A- 4 102 716
- DE-U- 7 708 833

## Beschreibung

Die Erfindung betrifft eine Reibahle für die Feinstbearbeitung, insbesondere Microzerspanung, von Bohrungsoberflächen gemäß Oberbegriff des Anspruchs 1, siehe DE-A-4102716.

Reibahlen der hier angesprochenen Art sind bekannt. Sie dienen der Erzeugung von Bohrungen mit besonderer Präzision, insbesondere hoher Oberflächengüte und Maßgenauigkeit. Es ist besonders wichtig, daß die Präzision über hohe Stückzahlen konstant bleibt. Es hat sich gezeigt, daß insbesondere bei der Bearbeitung von Stahl gerade bei dem Einsatz von Einschneidenreibahlen die Standlängen relativ kurz waren. Das Bohrungsmaß nimmt also relativ schnell ab.

Es ist daher Aufgabe der Erfindung, eine Reibahle der eingangs genannten Art zu schaffen, die diese Nachteile nicht aufweist.

Zur Lösung der Aufgabe wird eine Reibahle vorgeschlagen, die die in Anspruch 1 genannten Merkmale aufweist. Dadurch, daß die Reibahle eine Messerplatte mit zwei Schneidenbereichen aufweist, die über eine Stufe voneinander getrennt sind und dazu dienen, ein und dieselbe Bohrungsoberfläche zu bearbeiten, wird erreicht, daß die Belastung des radial außenliegenden Schneidenbereichs bei Einsatz der Reibahle einer geringeren Belastung unterworfen wird und damit einen wesentlich reduzierten Verschleiß aufweist. Es hat sich gezeigt, daß die Standlänge, bei der das Bohrungsmaß innerhalb von Feinbearbeitungsqualitäten bleibt, fünf- bis zehnmal so groß ist wie bei herkömmlichen Reibahlen.

Besonders bevorzugt wird eine Reibahle, bei der die Stufe zwischen den beiden Schneidbereichen eine Hohe von ca. 0,05 mm aufweist. Der radial außenliegende Schneidbereich dient also der Feinstbearbeitung beziehungsweise Microzerspanung, während der andere Schneidbereich der Hauptzerspanung dient.

Bevorzugt wird außerdem eine Ausführungsform der Reibahle, bei der die Länge des ersten Schneidbereichs, nämlich dem in Vorschubrichtung gesehen vorderen Schneidbereichs, ca. 3 mm beträgt. Auf diese Weise ist sichergestellt, daß die Stufe zwischen dem ersten Schneidbereich und dem -in Vorschubrichtung gesehen nachfolgenden- zweiten Schneidbereich sehr klein ist und der zweite Schneidbereich der Feinstbearbeitung zugeordnet ist.

Bevorzugt wird weiterhin ein Ausführungsbeispiel der Reibahle, die sich dadurch auszeichnet, daß der erste Schneidbereich der Messerplatte an seinem vorderen Ende einen in Vorschubrichtung abfallenden Anschnitt aufweist, der es ermöglicht, das Werkzeug präzise in die Bohrung einzuführen und eine optimale Abstützung an den Führungsflächen der Führungseinrichtung ermöglicht.

Bevorzugt wird weiterhin ein Ausführungsbeispiel der Reibahle, die sich dadurch auszeichnet, daß die Stufe zwischen dem ersten und zweiten Schneidbereich eine in Vorschubrichtung geneigte Fläche aufweist, die als Hauptschneide dient. Dadurch wird erreicht, daß im Übergangsbereich zwischen den beiden Schneidbereichen wiederum eine optimale Führung des Werkzeugs in der Bohrung gewährleistet ist.

Schließlich wird ein Ausführungsbeispiel der Reibahle bevorzugt, deren Führungseinrichtung zwei Führungsleisten aufweist, die sich dadurch auszeichnen, daß in ihrem vorderen Bereich ein Anschnitt vorgesehen ist, der an den an der Messerplatte vorgesehenen Anschnitt angepaßt ist. Durch die sich dadurch einstellende optimale Führung des Werkzeugs beim Einführen in die zu bearbeitende Bohrung wird sichergestellt, daß auch der Anfangsbereich der bearbeiteten Bohrung eine besonders hohe Oberflächengüte und Maßgenauigkeit aufweist.

Die Erfindung wird im folgenden anhand der Zeichnung näher erläutert. Es zeigen:
- Figur 1: eine perspektivische Ansicht einer Reibahle;
- Figur 2: eine Vorderansicht einer Messerplatte;
- Figur 3: eine Ansicht der Stirnseite der Messerplatte und
- Figur 4: eine perspektivische Ansicht des vorderen Teils einer Messerplatte.

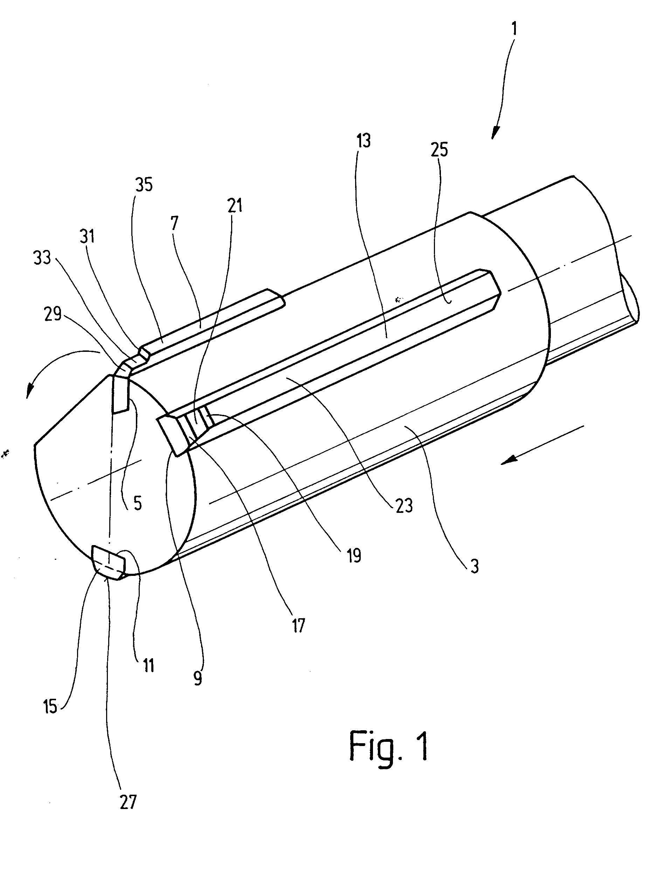

Die Darstellung gemäß Figur 1 soll nur grundsätzlich wiedergeben, wie die erfindungsgemäße Reibahle 1 ausgestaltet ist: In eine in die Umfangswandung 3 eingebrachte Nut 5 ist eine Messerplatte 7 eingesetzt. Sie wird dort auf geeignete, bekannte Weise, beispielsweise durch eine oder mehrere Spannpratzen befestigt. In der Umfangswandung sind hier zwei weitere Nuten 9 und 11 vorgesehen, in die sich in Längsrichtung der Reibahle 1 erstreckende Führungsleisten 13 und 15 eingesetzt sind. Die erste Führungsleiste eilt der Messerplatte 7 -in der durch einen Pfeil angedeuteten Drehrichtung gesehen- um ca. 40° nach; die zweite Führungsleiste 15 ist der Messerplatte 7 gegenüberliegend angeordnet. Die Länge der Führungsleisten 13 und 15 ist wesentlich länger als die der Messerplatte 7.

Die Führungsleisten 13 und 15 weisen an ihrer -in der durch einen Pfeil gekennzeichneten Vorschubrichtung gesehen- vorderen Seite einen Anschnitt 17 auf, der durch eine in Vorschubrichtung abfallende Fläche gebildet wird. An den Anschnitt 17 schließt sich eine Stufe 19 an, so daß ein radial innenliegender Bereich 21 und ein radial außenliegender Bereich 23 gebildet werden.

Die Führungsleisten weisen Führungsflächen 25 und 27 auf, die der Abstützung der Reibahle in der zu bearbeitenden Bohrung dienen. Auch die Messerplatte 7 weist einen Anschnitt 29 und eine Stufe 31 auf, so daß auch hier ein radial innenliegender Bereich 33 und ein radial außenliegender Bereich 35 gebildet werden.

Die Anschnitte der Messerplatte und die der Führungsleisten sind, ebenso wie die Anordnung der Stufen in der Messerplatte beziehungsweise in den Führungsleisten aufeinander abgestimmt, so daß sich beim Einführen der Reibahle 1 in eine zubearbeitende Bohrung eine optimale Führung ergibt und bereits der Einlaufbereich der Bohrung eine Oberfläche mit besonderer Präzision aufweist.

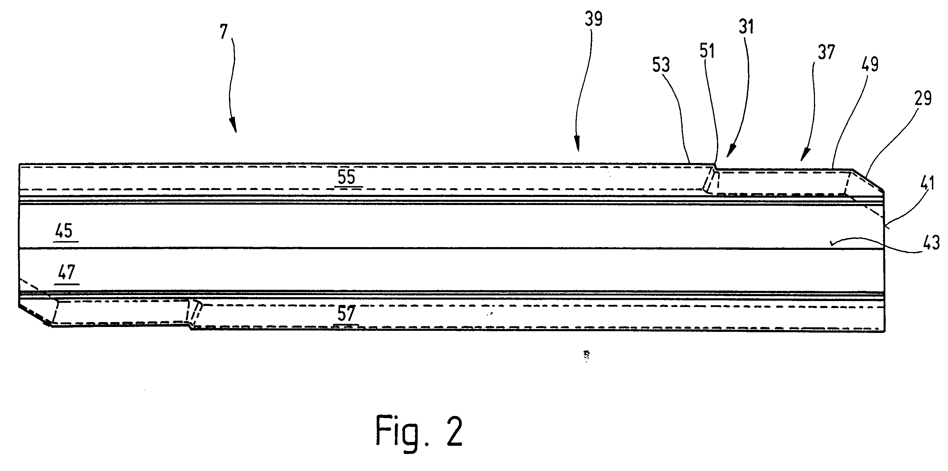

Aus Figur 2 ist erkennbar, daß die Messerplatte 7 als sogenannte Wendeplatte ausgebildet ist, die an zwei einander diagonal gegenüberliegenden Kantenbereichen identisch ausgebildet ist. Das heißt, der rechte obere Bereich der Messerplatte 7 ist identisch ausgebildet wie der links unten liegende Bereich. Im folgenden wird bei der Beschreibung daher nur auf den rechten oberen Bereich eingegangen. Die Erläuterungen gelten entsprechend für den links unten liegenden Bereich.

Die Messerplatte 7 weist einen in Vorschubrichtung vorderen ersten Schneidbereich 37 auf, der über die Stufe 31 in einen zweiten Schneidbereich 39 übergeht. Die beiden Schneidbereiche 37 und 39 dienen der Bearbeitung ein und derselben Bohrungsoberfläche, wobei der erste Schneidbereich 37 der Hauptzerspanung dient und der in Vorschubrichtung nachfolgende zweite Schneidbereich 39 der Feinstbearbeitung, insbesondere Microzerspanung. Die Höhe der Stufe 31 kann in einem Bereich von 0,01 mm bis 0,1 mm gewählt werden, vorzugsweise liegt die Höhe jedoch in einem Bereich von 0,02 mm bis 0,06 mm. Besonders bewährt hat sich eine Höhe von ca. 0,043 mm bis 0,05 mm.

Die Messerplatte 7 wird so in der Reibahle 1 festgespannt, daß bei der Bearbeitung einer Bohrungsoberfläche mit dem ersten Schneidbereich ein Span mit einer Dicke von ca. 0,2 mm abgetragen wird, während die Schnitttiefe im zweiten Schneidbereich 39 maximal ca. 0,05 mm beträgt. Durch diese Einstellung wird erreicht, daß bei einer Abnutzung der Schneiden die Schnittiefe im zweiten Schneidbereich 39 um 0,01 mm zunimmt.

Die in Längsrichtung der Messerplatte 7 gemessene Länge des ersten Schneidbereichs 37 beträgt zwischen der Stirnseite 41 der Messerplatte bis zur Stufe 31 vorzugsweise 5 mm bis 1 mm. Besonders bewährt hat sich eine Länge von ca. 3,0 mm. Je nach Einsatz der Reibahle 1 ist auch eine Länge von 10 mm bis 0,5 mm denkbar.

Die Darstellung in Figur 2 läßt erkennen, daß die Gesamtlänge der Messerplatte 7 wesentlich größer ist als die Länge des ersten Schneidbereichs 37. Dadurch wird sichergestellt, daß die Messerplatte 7 so in der Reibahle 1 festgespannt werden kann, daß eine Kippbewegung der Messerplatte 7 im Grundkörper der Reibahle 1 auch unter Einwirkung der bei der Bearbeitung einer Bohrungsoberfläche auftretenden Kräfte nicht aus ihrer Einstelllage herausbewegt wird.

Die hier dargestellte Ausführungsform der Messerplatte ist -in Draufsicht gesehen- im wesentlichen rechteckförmig. Sie kann daher relativ klein ausgebildet werden und auch bei Reibahlen 1 mit einem kleinen Außendurchmesser Verwendung finden.

Um eine sichere Verspannung der Messerplatte 7 im Grundkörper der Reibahle zu gewährleisten, ist auf der auch als Messerbrust bezeichneten Vorderseite 43 der Messerplatte 7 eine Spann-Nut vorgesehen, die zwei in einem stumpfen Winkel zueinander verlaufende Spannflächen 45 und 47 aufweist, die mit der Spannlippe einer hier nicht dargestellten Spannpratze zusammenwirken, die die Messerplatte 7 in der Nut 5 der Reibahle 1 fixiert.

Die Messerplatte 7 ist nahe ihrer Stirnseite 41 mit einem Anschnitt 29 versehen, der unter einem Winkel in Vorschubrichtung der Reibahle abfällt. Der Anschnitt 29 bildet die Hauptschneide 65 des ersten Schneidbereichs 37. Er kann sich von der Stirnseite 41 bis zu der sich an die Hauptschneide anschließenden Nebenschneide 49 unter einem gleichbleibenden Winkel von beispielsweise 30° erstrecken. Es ist jedoch auch möglich, daß die Hauptschneide einen unmittelbar an die Nebenschneide 49 angrenzenden Bereich mit einem flacheren Abfallwinkel aufweist.

Die Nebenschneide 49 zeichnet sich dadurch aus, daß sie -anders als die Hauptschneide- entgegen der Vorschubrichtung abfällt und zwar vorzugsweise um einen Winkel von beispielsweise 1°.

Auch die Stufe 31 weist eine in Vorschubrichtung geneigte Fläche 51 auf, deren Flankenwinkel in einem Bereich von ≤ 90° bis 20° insbesondere von 70° bis 50° liegt und vorzugsweise ca. 60° beträgt. Im Bereich dieser Fläche 51 liegt die Hauptschneide 67 des zweiten Schneidbereichs 39. An die Hauptschneide schließt sich die Nebenschneide 53 des zweiten Schneidbereichs 39 an, die ebenfalls entgegen der Vorschubrichtung geneigt ist.

Aus der Draufsicht gemäß Figur 2 ist ersichtlich, daß parallel zu den Längskanten der Messerplatte 7 und parallel zu den Spannflächen 45 und 47 Spanflächen 55 und 57 gegeben sind.

Aus der Darstellung der Stirnseite 41 der Messerplatte 7 ist folgendes ersichtlich:

Parallel zur Vorderseite 43 der Messerplatte 7 verläuft die Rückseite 59. Ausgehend von der Vorderseite 43 verläuft eine Freifläche 61 zur Rückseite 59. Die Freifläche 61 schließt mit der Vorderseite 43 einen spitzen Winkel ein, wobei die Freifläche 61 verschiedene Flächenabschnitte aufweist, die unter unterschiedlichen Winkeln zur Rückseite 39 abfallen. Ein erster Abschnitt 69, der sich unmittelbar an die Schneidkante 63 des ersten Schneidbereichs 37 anschließt fällt beispielsweise unter einen Winkel von 1° ab. Daran schließt sich ein zweiter Abschnitt 71 der Freifläche 61, der unter einem Winkel von ca. 7° abfällt. Schließlich fällt die Freifläche in einem sich im wesentlichen über die gesamte Dicke der Messerplatte 7 erstreckenden dritten Abschnitt 73 unter einem Winkel von beispielsweise 18° ab. Das heißt also der erste Abschnitt der Freifläche 61 ist sehr schmal und schließt sich unmittelbar an die Schneide 63 an. Der zweite Abschnitt ist wesentlich schmaler als der dritte Abschnitt.

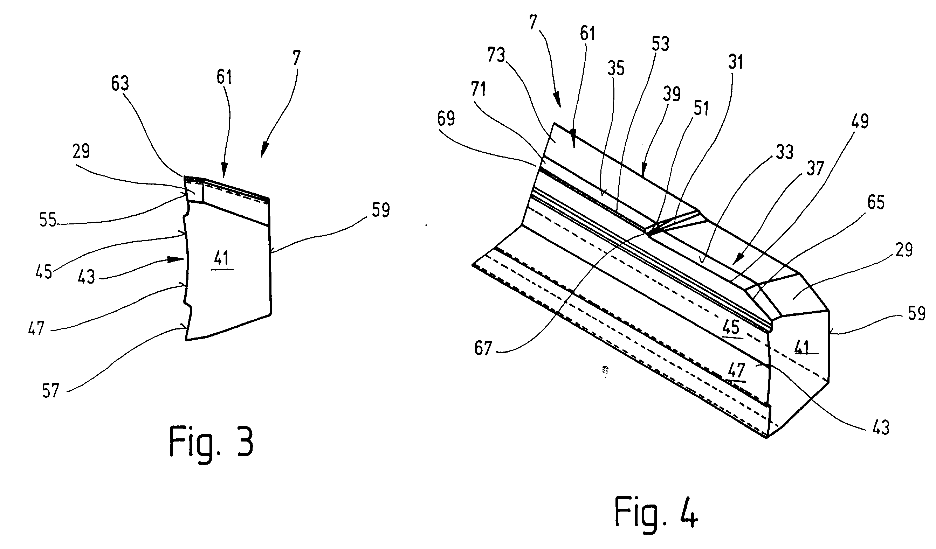

Die Darstellung gemäß Figur 3 läßt auch erkennen, daß die Spanflächen 55 und 57 einen spitzen Winkel mit einer gedachten senkrechten Ebene einschließen, die mit der Vorderseite 43 der Messerplatte 7 zusammenfällt beziehungsweise durch die Schneide 63 verläuft.

Letztlich liegen die verschiedenen Schneiden der Messerplatte in der Schnittlinie der Spanfläche 55 und der Freifläche 51.

Zum besseren Verständnis ist die Vorderseite 43 der Messerplatte 7 noch einmal perspektivisch dargestellt. Gleiche Teile sind mit gleichen Bezugsziffern versehen, so daß auf die Beschreibung der vorangegangenen Figuren verwiesen wird.

Die Darstellung läßt die beiden Schneidbereiche 37 und 39 besonders gut erkennen, die durch die Stufe 31 getrennt sind. Beim Einführen der Reibahle in eine zu bearbeitende Bohrung berührt die Messerplatte 7 die Bohrungswandung zunächst mit dem Anschnitt 29. Entsprechend berühren die Führungsleisten mit ihren Anschnitten die Bohrungswandung, so daß die Reibahle optimal in die Bohrung eingeführt wird. Im Bereich des Anschnitts 29 liegt die Hauptschneide 65 des ersten Schneidbereichs 37. Über einen Knick geht die Hauptschneide 65 in die Nebenschneide 49 des ersten Schneidbereichs 37 über.

Entsprechend bildet die in Vorschubrichtung abfallende Fläche 51 der Stufe 31 die Hauptschneide 67 des zweiten Schneidbereichs 39. Über eine Stufe geht diese Hauptschneide 67 in die Nebenschneide 53 des zweiten Schneidbereichs 39 über.

Die Darstellung gemäß Figur 4 läßt besonders deutlich erkennen, daß die Messerplatte 7 zwei Schneidbereiche 37 und 39 aufweist, die über die Stufe 31 ineinander übergehen und die insbesondere der Bearbeitung ein und desselben Oberflächenbereichs der Bohrung dienen. Die Freiflächen der beiden Schneidbereiche 37 und 39haben hier verschiedene Freiwinkel. Dabei werden im ersten Schneidbereich 37 Späne mit einer Dicke von ca. 0,2 mm abgetragen, so daß also dieser Bereich der Hauptzerspanung dient. Da die Höhe der Stufe 31 sehr gering gewählt ist, dient der zweite Schneidbereich der Feinstbearbeitung beziehungsweise Microzerspanung. Hier werden Späne mit einer Dicke von ca. 0,05 mm abgetragen. Es wird deutlich, daß die Hauptbelastung im ersten Schneidbereich 37 liegt, so daß eine deutliche Entlastung des zweiten Schneidbereichs 39 gegeben ist. Bei einem Verschleiß des ersten Schneidbereichs 37 wird dennoch die gewünschte Oberflächenpräzision eingehalten, da lediglich im zweiten Schneidbereich 39 ein etwas dickerer Span abgetragen wird, wobei die Spandicke um ca. 0,01 mm zunehmen kann. Dabei bleibt immer noch sichergestellt, daß die gewünschte Präzision der Bohrungsoberfläche eingehalten wird.

Durch die Aufspaltung der Belastungsbereiche der Messerplatte 7 wird eine sehr hohe Standzeit erreicht, die fünf- bis zehnmal höher liegt als die herkömmlicher Messerplatten.

Um die hier dargestellten Vorteile der Messerplatte 7 sicherzustellen, sollte die Stufenlänge zwischen den beiden Schneidbereichen, also die Länge des ersten Schneidbereichs 37 möglichst kurz sein. Als besonders günstig hat sich eine Länge von maximal 3 mm herausgestellt.

Aus der Darstellung gemäß Figur 3 wird deutlich, daß bei einer aus Figur 1 ersichtlichen Dreh- und Vorschubbewegung der Reibahle von der Bohrungsoberfläche Späne abgetragen werden, die auf der Spanfläche 55 ablaufen und von der Bearbeitungsstelle weggeführt werden können. Durch die Freifläche 61 ist gewährleistet, daß sich die Reibahle 1 nicht in der Bohrung festsetzt. Die unter verschiedenen Winkeln abfallenden Abschnitte der Freifläche 61 ermöglichen es, daß ein schmaler unmittelbar an die Schneide anschließender Bereich vorgesehen werden kann, der der Abstützung der Messerplatte 7 beziehungsweise der Reibahle 1 in der Bohrung gewährleistet. Dieser schmale der Abstützung der Messerplatte dienende Streifen der Freifläche 61 ist in Figur 4 mit der Bezugsziffer 69 gekennzeichnet. An diesen ersten sehr flach abfallenden Abschnitt der Freifläche schließt sich ein immer noch relativ schmaler Abschnitt 71 an, der dann in den dritten Abschnitt 73 übergeht.

## Patentansprüche

1. Reibahle für die Feinstbearbeitung, insbesondere Microzerspanung, von Bohrungsoberflächen, mit einer Messerplatte und mit einer Führungseinrichtung, **dadurch gekennzeichnet**, daß die Messerplatte (7) zwei Schneidbereiche (37, 39) aufweist, die über eine Stufe (31) voneinander getrennt sind und die der Bearbeitung ein und derselben Bohrungsoberfläche dienen.

2. Reibahle nach Anspruch 1, **dadurch gekennzeichnet**, daß die Höhe der Stufe (31) in einem Bereich von 0,01 mm bis 0,1 mm, vorzugsweise von 0,02 mm bis 0,6 mm liegt und insbesondere ca. 0,04 mm beträgt.

3. Reibahle nach Anspruch 1 oder 2, **dadurch gekennzeichnet**, daß der -in Vorschubrichtung gesehen vordere- erste Schneidbereich (37) der Hauptzerspanung dient und der -in Vorschubrichtung gesehen nachfolgende- zweite Schneidbereich (39) der Feinstbearbeitung, insbesondere Microzerspanung dient.

4. Reibahle nach einem der vorhergehenden Ansprüche, **dadurch gekennzeichnet**, daß im ersten Schneidbereich Späne mit einer Dicke von ca. 0,2 mm abgetragen werden und im zweiten Schneidbereich (39) Späne in einer Dicke von etwa 0,02 mm bis 0,08 mm vorzugsweise von 0,03 mm bis 0,06 mm insbesondere von 0,05 mm abgetragen werden.

5. Reibahle nach einem der vorhergehenden Ansprüche, **dadurch gekennzeichnet**, daß die Länge des ersten Schneidbereichs (39) ca. 10 mm bis 0,5 mm, vorzugsweise 5 mm bis 1 mm und insbesondere ca. 3 mm beträgt.

6. Reibahle nach einem der vorhergehenden Ansprüche, **dadurch gekennzeichnet**, daß die Gesamtlänge der Messerplatte (7) wesentlich größer ist als die Länge des ersten Schneidbereichs (37).

7. Reibahle nach einem der vorhergehenden Ansprüche, **dadurch gekennzeichnet**, daß die Messerplatte (7) im wesentlichen rechteckförmig ausgebildet ist.

8. Reibahle nach einem der vorhergehenden Ansprüche, **dadurch gekennzeichnet**, daß die Messerplatte (7) als Wendeplatte ausgebildet ist.

9. Reibahle nach einem der vorhergehenden Ansprüche, **dadurch gekennzeichnet**, daß die Messerplatte (7) auf ihrer auch als Messerbrust bezeichneten Vorderseite (43) eine zwei in einem stumpfen Winkel zueinander verlaufende Spannflächen (45, 47) aufweisende Spann-Nut umfaßt.

10. Reibahle nach einem der vorhergehenden Ansprüche, **dadurch gekennzeichnet**, daß der erste Schneidbereich (37) an seinem in Vorschubrichtung gesehen vorderen Ende einen in Vorschubrichtung abfallenden Anschnitt (29) aufweist.

11. Reibahle nach Anspruch 10, **dadurch gekennzeichnet**, daß der Anschnitt (29) einen oder mehrere Abfallwinkel aufweist.

12. Reibahle nach einem der vorhergehenden Ansprüche, **dadurch gekennzeichnet**, daß der erste Schneidbereich (37) einen die Hauptschneide (65) bildenden Anschnitt (29) und eine Nebenschneide (49) aufweist, die entgegen der Vorschubrichtung abfällt.

13. Reibahle nach einem der vorhergehenden Ansprüche, **dadurch gekennzeichnet**, daß die Stufe (31) zwischen dem ersten Schneidbereich (37) und dem zweiten Schneidbereich (39) eine in Vorschubrichtung geneigte Fläche (51) aufweist.

14. Reibahle nach Anspruch 13, **dadurch gekennzeichnet**, daß die Fläche unter einem Winkel von < 90° bis 20°, vorzugsweise von 70° bis 50° und insbesondere von 60° abfällt.

15. Reibahle nach einem der vorhergehenden Ansprüche, **dadurch gekennzeichnet**, daß die Stufe (31) die Hauptschneide (67) des zweiten Schneidbereichs (39) bildet.

16. Reibahle nach einem der vorhergehenden Ansprüche, **dadurch gekennzeichnet**, daß der zweite Schneidbereich (39) eine an die Hauptschneide (67) angrenzende, entgegen der Vorschubrichtung abfallende Nebenschneide (53) aufweist.

17. Reibahle nach einem der vorhergehenden Ansprüche, **dadurch gekennzeichnet**, daß die Schneiden (65, 49; 67, 53) des ersten und zweiten Schneidbereichs (37; 39) mit der Schnittlinie einer Spanfläche (55) und einer mit der Messerbrust einen spitzen Winkel einschließenden Freifläche (61) zusammenfallen.

18. Reibahle nach Anspruch 17, **dadurch gekennzeichnet**, daß die Freifläche (61) -ausgehend von der Schneidkante (65, 29; 67, 57)- unter verschiedenen Winkeln zu der der Vorderseite (43) gegenüberliegenden Rückseite (59) der Messerplatte (7) abfallen.

19. Reibahle nach einem der vorhergehenden Ansprüche, **dadurch gekennzeichnet**, daß die Freifläche in (61) in einem ersten Abschnitt (Streifen (69)) unter einem Winkel von circa 1°, in einem zweiten Abschnitt (71) unter einem Winkel von circa 7° und in einem dritten Abschnitt (73) unter einem Winkel von circa 18° abfällt.

20. Reibahle nach einem der vorhergehenden Ansprüche, **dadurch gekennzeichnet**, daß die Freiflächen des ersten Schneidbereichs (37) und des zweiten Schneidbereichs (39) unter verschiedenen Winkeln verlaufen.

21. Reibahle nach einem der vorhergehenden Ansprüche, **dadurch gekennzeichnet**, daß die Führungseinrichtung aus zwei in Längsrichtung der Reibahle (1) verlaufenden Führungsleisten (13, 15) besteht.

22. Reibahle nach Anspruch 21, **dadurch gekennzeichnet**, daß die Führungsleisten (13, 15) in -in Vorschubrichtung gesehen- vorderen Bereich einen Anschnitt (17) aufweisen, der an den Anschnitt (29) der Messerplatte (7) angepaßt ist.

23. Reibahle nach Anspruch 21 oder 22, **dadurch gekennzeichnet**, daß die Führungsleisten (13, 15) in ihrem vorderen Bereich abgestuft sind.

24. Reibahle nach einem der Ansprüche 21 bis 23, **dadurch gekennzeichnet**, daß die Länge und Höhe der Stufen in den Führungsleisten (13, 15) an die Länge und Höhe der Stufe (31) in der Messerplatte (7) angepaßt sind.

## Claims

1. A reamer for the precision finishing, in particular micro-machining, of hole surfaces, having a knife plate and having a guide arrangement, characterised in that the knife plate (7) has two cutting regions (37, 39) which are separated from one another by a step (31) and which serve to finish one and the same hole surface.

2. A reamer in accordance with Claim 1, characterised in that the height of the step (31) is in a range from 0.01 mm to 0.1 mm, preferably from 0.02 mm to 0.6 mm, and is in particular approximately 0.04 mm.

3. A reamer in accordance with Claim 1 or 2, characterised in that the first cutting region (37) - which is at the front when viewed in the feed direction - is used for the main machining, and the second cutting region (39) - which follows thereafter when viewed in the feed direction - is used for the precision finishing, in particular micro-machining.

4. A reamer in accordance with any one of the preceding Claims, characterised in that chips with a thickness of approximately 0.2 mm are removed in the first cutting region, and chips with a thickness from approximately 0.02 mm to 0.08 mm, preferably from 0.03 mm to 0.06 mm, in particular 0.05 mm, are removed in the second cutting region (39).

5. A reamer in accordance with any one of the preceding Claims, characterised in that the length of the first cutting region (39) is approximately 10 mm to 0.5 mm, preferably 5 mm to 1 mm, and in particular approximately 3 mm.

6. A reamer in accordance with any one of the preceding Claims, characterised in that the total length of the knife plate (7) is substantially longer than the length of the first cutting region (37).

7. A reamer in accordance with any one of the preceding Claims, characterised in that the knife plate (7) is substantially rectangular.

8. A reamer in accordance with any one of the preceding Claims, characterised in that the knife plate (7) is a reversible plate.

9. A reamer in accordance with any one of the preceding Claims, characterised in that on its front side (43), also referred to as the knife face, the knife plate (7) comprises a clamping groove having two clamping surfaces (45, 47) which extend at an obtuse angle to one another.

10. A reamer in accordance with any one of the preceding Claims, characterised in that the first cutting region (37) has - at its end which is at the front when viewed in the feed direction - a chamfer (29) sloping downwards in the feed direction.

11. A reamer in accordance with Claim 10, characterised in that the chamfer (29) has one or a plurality of downward-slope angles.

12. A reamer in accordance with any one of the preceding Claims, characterised in that the first cutting region (37) has a chamfer (29), forming the main cutter (65), and a secondary cutter (49) which slopes downwards in the opposite direction to the direction of feed.

13. A reamer in accordance with any one of the preceding Claims, characterised in that the step (31) between the first cutting region (37) and the second cutting region (39) has a surface (51) inclined in the feed direction.

14. A reamer in accordance with Claim 13, characterised in that the surface slopes downwards at an angle of < 90° to 20°, preferably 70° to 50°, and in particular 60°.

15. A reamer in accordance with any one of the preceding Claims, characterised in that the step (31) forms the main cutter (67) of the second cutting region (39).

16. A reamer in accordance with any one of the preceding Claims, characterised in that the second cutting region (39) has a secondary cutter (53) which adjoins the main cutter (67) and which slopes downwards in an opposite direction to the feed direction.

17. A reamer in accordance with any one of the preceding Claims, characterised in that the cutters (65, 49; 67, 53) of the first and second cutting regions (37; 39) coincide with the intersection of a clamping surface (55) and a flank (61) which forms an acute angle with the knife face.

18. A reamer in accordance with Claim 17, characterised in that the flank (61) - originating at the cutting edge (65, 29; 67, 57) - slopes downwards at different angles relative to the knife-plate rear (59) which faces the front side (43).

19. A reamer in accordance with any one of the preceding Claims, characterised in that the flank (61) slopes downwards at an angle of approximately 1° in a first portion (strip (69)), at an angle of approximately 7° in a second portion (71) and at an angle of approximately 18° in a third portion (73).

20. A reamer in accordance with any one of the preceding Claims, characterised in that the flanks of the first cutting region (37) and the second cutting region (39) extend at different angles.

21. A reamer in accordance with any one of the preceding Claims, characterised in that the guide arrangement is composed of two guide strips (13, 15) which extend in the longitudinal direction of the reamer (1).

22. A reamer in accordance with Claim 21, characterised in that in the front region - when viewed in the feed direction - the guide strips (13, 15) have a chamfer (17) matched to the chamfer (29) of the knife plate (7).

23. A reamer in accordance with Claim 21 or 22, characterised in that the guide strips (13, 15) are stepped in their front region.

24. A reamer in accordance with any one of Claims 21 to 23, characterised in that the length and height of the steps in the guide strips (13, 15) are matched to the length and height of the step (31) in the knife plate (7).

## Revendications

1. Alésoir pour le micro-usinage, notamment pour le micro-enlèvement de copeaux, de surfaces d'alésage, avec une plaquette à lames et un dispositif de guidage, **caractérisé en ce que** la plaquette à lames (7) présente deux zones de coupe (37, 39) séparées l'une de l'autre par un décrochement (31) et servant à l'usinage de la même surface d'alésage.

2. Alésoir selon la revendication 1, **caractérisé en ce que** la hauteur du décrochement (31) est comprise dans une plage allant de 0,01 mm à 0,1 mm, de préférence de 0,02 mm à 0,06 mm, et qu'elle est notamment d'environ 0,04 mm.

3. Alésoir selon la revendication 1 ou 2, **caractérisé en ce que** la première zone de coupe (37) - placée en avant vu dans le sens d'avancement - sert à l'enlèvement principal de copeaux et que la seconde zone de coupe (39) - la suivante vu dans le sens d'avancement - sert au micro-usinage, notamment au micro-enlèvement de copeaux.

4. Alésoir selon l'une des revendications précédentes, **caractérisé en ce que** des copeaux d'une épaisseur d'environ 0,2 mm sont enlevés dans la première zone de coupe, et que des copeaux d'une épaisseur d'environ 0,02 mm à 0,08 mm, de préférence de 0,03 mm à 0,06 mm, notamment de 0,05 mm, sont enlevés dans la seconde zone de coupe (39).

5. Alésoir selon l'une des revendications précédentes, **caractérisé en ce que** la longueur de la première zone de coupe (39) est d'environ de 10 mm à 0,5 mm, de préférence de 5 mm à 1 mm, et qu'elle est notamment de 3 mm.

6. Alésoir selon l'une des revendications précédentes, **caractérisé en ce que** la longueur totale de la plaquette à lames (7) est beaucoup plus grande que la longueur de la première zone de coupe (37).

7. Alésoir selon l'une des revendications précédentes, **caractérisé en ce que** la plaquette à lames (7) est formée essentiellement de forme rectangulaire.

8. Alésoir selon l'une des revendications précédentes, **caractérisé en ce que** la plaquette à lames (7) est formée comme plaquette réversible.

9. Alésoir selon l'une des revendications précédentes, **caractérisé en ce que** la plaquette à lames (7) comprend, sur son côté avant (43) désigné aussi comme face coupante, une rainure de serrage présentant deux surfaces de serrage (45, 47) s'étendant en angle obtus l'une par rapport à l'autre.

10. Alésoir selon l'une des revendications précédentes, **caractérisé en ce que** la première zone de coupe (37) présente, sur son extrémité avant vu dans le sens d'avancement, une première découpe (29) à dépouille négative dans le sens d'avancement.

11. Alésoir selon la revendication 10, **caractérisé en ce que** la découpe (29) présente un ou plusieurs angles de dépouille.

12. Alésoir selon l'une des revendications précédentes, **caractérisé en ce que** la première zone de coupe (37) comporte une découpe (29) formant l'arête de coupe principale (65), et une arête de coupe secondaire (49) qui est inclinée à l'inverse du sens d'avancement.

13. Alésoir selon l'une des revendications précédentes, **caractérisé en ce que** le décrochement (31) entre la première zone de coupe (37) et la seconde zone de coupe (39) présente une surface inclinée (51) dans le sens d'avancement.

14. Alésoir selon la revendication 13, **caractérisé en ce que** la surface est inclinée selon un angle de moins de 90° à 20°, de préférence de 70° à 50°, et notamment selon un angle de 60°.

15. Alésoir selon l'une des revendications précédentes, **caractérisé en ce que** le décrochement (31) forme l'arête de coupe principale (67) de la seconde zone de coupe (39).

16. Alésoir selon l'une des revendications précédentes, **caractérisé en ce que** la seconde zone de coupe (39) présente une arête de coupe secondaire (53) adjacente à l'arête de coupe principale (67) et inclinée inversement au sens d'avancement.

17. Alésoir selon l'une des revendications précédentes, **caractérisé en ce que** les arêtes de coupe (65, 49 ; 67 ; 53) de la première et de la seconde zones de coupe (37; 39) coïncident avec la ligne de coupe d'une surface de coupe (55) et d'une surface libre (61) formant un angle aigu avec la face coupante.

18. Alésoir selon la revendication 17, **caractérisé en ce que** la surface libre (61) - partant de l'arête de coupe (65, 29 ; 67, 57) - est inclinée sous différents angles par rapport au côté arrière (59) opposé au côté avant (43) de la plaquette à lames (7).

19. Alésoir selon l'une des revendications précédentes, **caractérisé en ce que** la surface libre (61) est dans une première section (rayure (69)) inclinée selon un angle d'environ 1°, dans une seconde section (71) selon un angle d'environ 7° et dans une troisième section (73) selon un angle d'environ 18°.

20. Alésoir selon l'une des revendications précédentes, **caractérisé en ce que** les surfaces libres de la première zone de coupe (37) et de la seconde zone de coupe (39) s'étendent selon différents angles.

21. Alésoir selon l'une des revendications précédentes, **caractérisé en ce que** le dispositif de guidage est composé de deux baguettes de guidage (13, 15) s'étendant dans le sens longitudinal de l'alésoir (1).

22. Alésoir selon la revendication 21, **caractérisé en ce que** les baguettes de guidage (13, 15) présentent une découpe (17) dans la partie avant - vu en sens d'avancement -, découpe qui est adaptée à la découpe (29) de la plaquette à lames (7).

23. Alésoir selon la revendication 21 ou 22, **caractérisé en ce que** les baguettes de guidage (13, 15) sont dégradées dans leur partie avant.

24. Alésoir selon l'une des revendications 21 à 23, **caractérisé en ce que** la longueur et la hauteur des décrochements dans les baguettes de guidage (13, 15) sont ajustées à la longueur et à la hauteur du décrochement (31) de la plaquette à lames (7).
